# EUROPÄISCHE PATENTSCHRIFT

(11) **EP 3 018 284 B1**
(45) Veröffentlichungstag und Bekanntmachung des Hinweises auf die Patenterteilung: **08.08.2018**
(21) Anmeldenummer: 15192675.5
(22) Anmeldetag: 03.11.2015
(51) Int. Cl.: E06B 9/64, A01K 1/00, E06B 9/40, E06B 9/24

(54) **WICKELVORRICHTUNG ZUR ABDECKUNG VON GEBÄUDEÖFFNUNGEN**
WINDING DEVICE FOR COVERING OPENINGS OF A BUILDING
DISPOSITIF D'ENROULEMENT POUR LA COUVERTURE D'OUVERTURES DE BATIMENT

(30) Priorität: 10.11.2014 DE 202014105368 U
(43) Veröffentlichungstag der Anmeldung: 11.05.2016
(73) Patentinhaber: Lock Antriebstechnik GmbH, 88521 Ertingen (DE)
(72) Erfinder: Veit, Christoph, 88276 Weiler (DE)
(74) Vertreter: Otten, Roth, Dobler & Partner mbB Patentanwälte

(56) Entgegenhaltungen:
- EP-A1- 2 730 738
- US-A- 5 524 693
- US-A1- 2010 236 492
- US-B1- 6 401 794

## Beschreibung

### Stand der Technik

Vorrichtungen wie Wickeljalousien zur veränderlichen Vorgabe eines Abdeckbereichs einer Flächenstruktur, wobei durch zumindest teilweises Auf- und Abwickeln der Flächenstruktur mit dem nicht aufgewickelten Teil der Flächenstruktur die Abdeckfläche bestimmt ist, sind z.B. aus der US 5,524,693 oder der US 6,401,794 B1 bekannt.

Mit solchen Wickelvorrichtungen können veränderliche Jalousien, Wände oder Verschattungssysteme bereitgestellt werden. Als flächiges, wickelbares bzw. flexibles Abdeckelement kommt zum Beispiel eine Plane oder Folie in Betracht.

Derartige Anordnungen dienen häufig beispielsweise in der Landwirtschaft zur Regulierung einer Licht-, Luft- und/oder Wärmesituation in landwirtschaftlichen Stallungen, Gewächshäusern oder Lagerhäusern. Hierfür sind die Vorrichtungen mit dem Abdeckelement insbesondere an Gebäudeöffnungen angeordnet, um diese abzudecken oder zu öffnen.

Bei einem Einsatz im Freien sind häufig raue Umgebungsbedingungen zu berücksichtigen. Außerdem stellen großflächige Anwendungen beispielsweise durch auftretende hohe statische und dynamische Belastungen, die durch die wirkenden Gewichtskräfte bzw. z. B. wetterbedingten Wind- oder Schneelasten bedingt sind, vergleichsweise hohe Anforderungen an das Wickelsystem.

Darüber hinaus sind bei Großanwendungen montagefreundliche und wirtschaftliche Lösungen von zentraler Bedeutung.

### Aufgabe und Vorteile der Erfindung

Aufgabe der vorliegenden Erfindung ist es, einleitend genannte Anordnungen zu verbessern, um insbesondere die vorgenannten Hauptanforderungen an die betreffenden Systeme vorteilhaft zu erfüllen.

Diese Aufgabe wird durch den unabhängigen Anspruch gelöst.

Die abhängigen Ansprüche betreffen zweckmäßige und vorteilhafte Ausgestaltungen der Erfindung.

Die Erfindung geht aus von einer Wickelvorrichtung zur Abdeckung von Gebäudeöffnungen oder zur Bereitstellung von flexiblen Wänden, insbesondere für eine im wesentlichen vertikale Anwendung, umfassend ein flächiges, flexibles Abdeckelement zur zumindest teilweisen Abdeckung der wenigstens einen Gebäudeöffnung und ein von einer Antriebseinheit angetriebenes Wickelelement zum Einstellen einer Abdeckfläche der Abdeckung, wobei das Abdeckelement mit dem Wickelelement aufwickelbar und abwickelbar ist. Das Abdeckelement kann beispielsweise eine Plane oder Kunststofffolie sein, wie diese beispielsweise in der Landwirtschaft eingesetzt werden.

Eine Gebäudeöffnung kann beispielsweise eine Öffnung an einem vertikalen oder geneigten Gebäudeabschnitt wie einer Außenwand oder einer Dachfläche zum Beispiel eines Gewächshauses oder einer Stallung sein.

Die Antriebseinheit ist bevorzugt ein Antriebsmotor, beispielsweise ein Elektromotor. Alternativ oder zusätzlich ist auch ein Handantrieb zum Beispiel mit einer Kurbelanordnung möglich.

Außerdem geht die Erfindung davon aus, dass zusätzlich zu einem ersten Abdeckelement ein zweites Abdeckelement vorgesehen ist, das im Abdeckzustand überlappend zum ersten Abdeckelement anordenbar ist, wobei die Abdeckelemente mit einem Wickelelement aufwickelbar und abwickelbar sind. Dies ist im Hinblick auf eine robuste Anwendung und für die Anpassung der Abdeckung an unterschiedliche Betriebssituationen insbesondere im Hinblick auf verschiedene Umgebungsbedingungen vorteilhaft. Außerdem ist das Vorsehen eines weiteren Abdeckelements im Hinblick auf die Ergänzung des bestehenden Systems mit dem ersten Abdeckelement vorteilhaft, da die gleichen Grundvoraussetzungen für das zweite Abdeckelement gelten und damit problemlos im System integrierbar sind.

Die beiden Abdeckelemente sind für sich als separate Bauteile wirksam, haben also insbesondere nichts mit einem zweilagig verbundenen Abdeckelement zu tun.

Insbesondere sind beide Abdeckelemente in ihrer Funktion so ausgebildet, dass diese bei Weglassung des anderen Abdeckelements eine Abdeckfunktion entsprechend einem einzelnen auf- und abwickelbaren Abdeckelement bereitstellen. Die Überlappung der beiden Abdeckelemente ist in Richtung senkrecht zu einer von der Gebäudeöffnung aufgespannten Ebene zu sehen ist, so dass in diese Richtung die beiden Abdeckelemente hintereinander angeordnet sind.

Beide Abdeckelemente können in der Beschaffenheit gleichartig oder unterschiedlich ausgebildet sein, insbesondere sind beide Abdeckelemente vergleichbar oder identisch insbesondere in ihren mechanischen bzw. die Flexibilität betreffenden Eigenschaften.

Vorteilhafterweise ist die Antriebseinheit ortsfest positioniert. Dies kann beispielsweise an einer Gebäudewand oder einer Dachfläche nahe einer Gebäudeöffnung sein. Das Wickelelement ist bevorzugt horizontal ausgerichtet, insbesondere neben der Drehbarkeit um die eigene Längsachse um eine Vorgabeposition geringfügig ausweichbar. Das Wickelelement kann beispielsweise an einem Abdeckelementrand aufgehängt und nach oben und horizontal etwas ausweichbar sein.

Weiter ist es vorteilhaft, dass die zwei Abdeckelemente in einem abgewickelten Zustand hintereinander angeordnet sind, so dass die beiden Abdeckelemente mit Abstand überlappen. Die Überlappung mit Abstand ist bezogen auf einen ruhenden bzw. im Gleichgewicht sich befindenden Zustand der Abdeckelemente. Der dabei sich einstellende Abstand zwischen den beiden Abdeckelementen ist insbesondere konstruktiv vorgegeben.

Zur vorteilhaften Funktion der erfindungsgemäßen Vorrichtung ist daher eine abstandbildende Überlappung zwischen den beiden Abdeckelementen einzurichten.

Der Abstand bringt verschiedene Vorteile mit sich. Mit dem Abstand ist vorteilhafterweise zwischen den zwei Abdeckelementen ein materialfreier Zwischenraum ausbildbar, der in der Regel ein Luftspalt ist. Der Luftspalt kann insbesondere dauerhaft für eine Temperatur der beiden Abdeckelemente sorgen, welche oberhalb des Wasser-Gefrierpunktes liegt. Damit kann zum Beispiel bei tiefen Umgebungstemperaturen wie bei Außeneinsätzen im Winter bzw. Polarregionen oder bei Nutzung in Kühllagern ein Anfrieren der Abdeckelemente an benachbarten Flächen vermieden werden, insbesondere die Bildung einer Eisschicht auf den Abdeckelementen. Damit lassen sich mit der erfindungsgemäßen Anordnung vorteilhaft Funktionsstörungen ausschließen, die ansonsten regelmäßig auftreten, zum Beispiel indem ein Auf- und Abwickeln des mit einer Eisschicht versehenen Abdeckelements behindert oder unmöglich ist.

Mit dem Abstand wird ein nach außen zumindest im Wesentlichen abgetrennter Raum zwischen den jeweiligen Innenseiten der Abdeckelemente bereitgestellt, der vorteilhaft erwärmbar ist. Das für ein gewünschtes Temperaturverhalten notwendige Volumen bzw. Mindestvolumen pro Abdeckfläche kann einfach durch den konstruktiv vorgebbaren Abstand der beiden überlappenden Abdeckelemente eingerichtet werden.

Die beiden Abdeckelemente bilden zwischen sich eine temporäre Zwischen- bzw. Wärmeschicht, die nur im abgewickelten Zustand zwischen den beiden Abdeckelementen vorhanden ist. Vorteilhafterweise verschwindet im aufgewickelten Zustand der Zwischenraum gänzlich, was vorteilhaft ist, da der aus dem aufgewickelten Material der Abdeckelemente gebildete Wickel auf dem Wickelelement im Durchmesser minimal ist. Die beim aufwickeln der Abdeckelemente zu verdrängende Luft im Zwischenbereich kann zum Beispiel seitlich am Rand er Abdeckelemente nach außen in die Umgebung entweichen. Insbesondere ist der Zuwachs des Durchmessers des Wickels auf dem Wickelelement gegenüber einem einzigen Abdeckelement in einem vergleichsweise geringen und tolerierbaren Rahmen gegenüber einer bisherigen Anordnung mit genau einem Abdeckelement, bei welchem aber die diskutierten Nachteile bei tiefen Temperaturen auftreten.

Die beiden Abdeckelemente sind vorteilhaft über die gesamte oder nahezu gesamte abgewickelte Ausdehnung mit dem Abstand zueinander aufgespannt und damit entsprechend vorteilhaft wirksam.

Die Beabstandung der beiden abgewickelten Abdeckelemente voneinander kann vorteilhaft ohne eigens dafür vorgesehene Abstandmittel bzw. konstruktiv bedingt eingerichtet sein. Alternativ oder zusätzlich können entsprechende Mittel wie z. B. Abstandhalter vorgesehen sein.

Vorteilhafterweise ist wenigstens ein Abdeckelement zumindest im Wesentlichen transparent ausgebildet, womit bei Außenanwendungen Licht bzw. Sonnenstrahlen durch das transparente Abdeckelement dringen kann. Damit können Sonnenstrahlen den Bereich des materialfreien Abstandes zwischen den Abdeckelementen erwärmen. Demgemäß ist es vorteilhaft, wenn insbesondere das äußere bzw. von der Gebäudeöffnung weiter entfernte Abdeckelement transparent ausgestaltet ist. Das innere Abdeckelement kann transparent oder reflektierend sein und ist insbesondere isolierend, um einen Wärmeverlust vom Zwischenbereich nach außen zu minimieren. Damit bleiben wesentliche Anteile der thermischen Energie innerhalb des Bereichs des Abstandes zwischen den beiden Abdeckelementen gefangen, so dass dieser Bereich bei vergleichsweise tieferen Umgebungstemperaturen von unter Null Grad Celsius eine zur Umgebung erhöhte Temperatur aufweist. Ein Vereisen der Abdeckelemente und damit Versteifen, was ein Auf- und Abwickeln unmöglich macht, oder ein Anfrieren der Abdeckelemente an benachbarten Abschnitten bzw. kalten Flächen kann vorteilhaft vermieden werden.

Die beiden Abdeckelemente sind zueinander zwischen einem oberen und einem unteren Rand des Abdeckelements insbesondere über die jeweilige gesamte Fläche bzw. deren Inneseiten getrennt voneinander bzw. beabstandet. Der Abstand kann zum Beispiel im Bereich von einem Zentimeter liegen bzw. bis mehrere Zentimeter betragen.

Das Wickelelement ist insbesondere ein längliches mit der Antriebseinheit in beiden Drehrichtungen um seine Längsachse drehbares Profil wie eine Wickelwelle oder ein hohles Wickelrohr. Das Wickelelement entspricht vorteilhaft in der Länge der Gesamtbreite der Abdeckelemente. Die Antriebseinheit ist insbesondere in axialer Verlängerung zum Wickelelement seitlich dazu benachbart mit dem Wickelement über eine Momenten-Übertragungseinheit verbunden, ggf. etwas vertikal versetzt zur Achse des Wickelelements.

Es ist über dies vorteilhaft, dass ein unterer Rand des ersten Abdeckelements und ein unterer Rand des zweiten Abdeckelements an einem gemeinsamen Wickelelement angreifen. Dies ist eine besonders kompakte, einfache und materialsparende Anordnung. Die beiden Abdeckelemente können mit ihrem jeweiligen unteren Rand über die Länge am Wickelelement außen befestigt sein, getrennt zum Beispiel über einen halben Außenumfang des Wickelelements. Unter dem Eigengewicht des Wickelements werden die beiden Abdeckelemente auch im abgewickelten Zustand straff und faltenfrei gespannt bzw. die unteren Ränder gegen ungewolltes Flattern und gegen Faltenbildung stabilisiert.

Alternativ ist es möglich, dass ein unterer Rand des ersten Abdeckelements an einem ersten Wickelelement angreift und ein unterer Rand des zweiten Abdeckelements an einem zweiten Wickelelement angreift. Damit sind beide Abdeckelemente über jeweils ein zugeordnetes bzw. separates Wickelelement auf- und abwickelbar. Dies kann im Hinblick auf eine besonders flexible Bereitstellung der Abdeckung vorteilhaft sein. Insbesondere kann die Position des jeweiligen unteren Randes der vollständig abgewickelten Abdeckelemente mittels des jeweiligen Wickelelements vorgegeben werden, zum Beispiel horizontal und/oder vertikal etwas versetzt zueinander.

Beide Wickelelemente sind bevorzugt über eine gemeinsame Antriebseinheit drehbar.

Der Kern der Erfindung liegt darin, dass ein oberer Rand des ersten Abdeckelements und ein oberer Rand des zweiten Abdeckelements an einer gemeinsamen Aufnahme fixiert sind, wobei die Aufnahme als ein längliches Profil ausgebildet ist, wobei kein Auf- oder Abwickeln der oberen Ränder stattfindet. Damit ist ein einfaches und kompaktes System bereitgestellt. Insbesondere sind die jeweiligen oberen Ränder der beiden Abdeckelemente an einem länglichen Profil, wie einer durchgehenden Schiene, einem Stab oder an einem Rohr fixiert. Gegebenenfalls können die oberen Ränder der beiden Abdeckelemente miteinander verbunden sein bzw. die beiden Abdeckelemente sind oben durchgehend miteinander verbunden.

Auch ist es vorteilhaft, dass beide Abdeckelemente im Wesentlichen die gleichen Abmaße aufweisen. Damit ist die komplette abzudeckende Gebäudeöffnung oder die komplette flexible Wand mit beiden Abdeckelementen überlappend abgedeckt bzw. gebildet. So kann über die gesamte Fläche der Abdeckelemente die Beabstandung der beiden Abdeckelemente eingerichtet sein, womit die durch die Beabstandung begründeten Vorteile über die gesamte von der Wickelvorrichtung beaufschlagbare Fläche erzielbar sind.

Insbesondere weisen die beiden Abdeckelemente eine gleiche Länge, Höhe und Breite auf. Das Material bzw. die Dicke der beiden Abdeckelemente können übereinstimmen oder sich unterscheiden.

Weiter ist es vorteilhaft, dass beide Abdeckelemente im Hinblick auf die Lichtdurchlässigkeit und/oder das Reflexionsverhalten aufeinander abgestimmt sind. Insbesondere sind sie die beiden Abdeckelemente unterschiedlich beschaffen was die Durchlässigkeit bzw. Reflexion für Sonnen- bzw. Lichtstrahlen betrifft.

Damit ist es beispielsweise vorteilhaft möglich, einstrahlende Lichtstrahlen bzw. Sonnenenergie durch ein außenliegendes Abdeckelement durchtreten zu lassen, wobei das weitere Abdeckelement die ankommenden Lichtstrahlen bzw. Sonnenenergie reflektiert. Im Zwischen- bzw. Abstandsbereich zwischen den beiden überlappenden Abdeckelemente wird damit ein Energiegehalt durch Sonnenlicht oder ggf. auch künstliches Licht erhöht, womit die Temperatur im Zwischenbereich ansteigt bzw. sich die im Zwischenbereich vorhandene Luft erwärmt.

Es ist überdies vorteilhaft, dass zwei Wickelelemente vorgesehen sind, die bei vollständig abgewickelten Abdeckelementen zueinander in vertikaler und/oder in horizontaler Richtung versetzt sind. Dies kann aus räumlichen Gründen und/oder konstruktiv vorteilhaft sein. Mit dem horizontalen Versatz zwischen den Wickelelementen kann der Abstand zwischen den überlappenden Abdeckelementen beeinflusst werden.

Beide Wickelelemente sind vorteilhaft gleichartig. Beispielsweise können die beiden Wickelwellen die gleiche Länge und den gleichen Durchmesser aufweisen.

Auch ist es vorteilhaft, dass die Verbindung von Antriebseinheit und Wickelelement derart ausgelegt ist, dass eine Änderung der vertikalen Höhenposition des Wickelelements beim Wickelvorgang ausgeglichen werden kann. Beispielsweise können der untere Rand des ersten Abdeckelements und der untere Rand des zweiten Abdeckelements in vertikaler und/oder horizontaler Richtung ausweichen. Beispielsweise kann aufgrund des veränderlichen Wickeldurchmessers beim Auf- und Abwickeln des Abdeckelements das Wickelelement etwas aus einer vertikal festgelegten Lage versetzt werden, was durch die anpassbare Verbindung ausgleichbar ist, so dass eine relevante Faltenbildung ausgeschlossen wird und keine unerwünschten starken Zugspannungen auf das Abdeckelement wirken, womit ggf. darauf zurückzuführende Beschädigungen des Abdeckelements vermieden werden.

Zwischen einem Wickelelement und der Antriebseinheit ist zum Beispiel eine Teleskopgelenkkupplung vorteilhaft einsetzbar.

Diese ermöglicht bei positionsfester Antriebseinheit eine geringe Ausweichbewegung der Wickelwelle zur Gebäudeöffnung hin oder von dieser weg bzw. vertikal nach oben oder unten.

Eine weitere vorteilhafte Ausgestaltung der Erfindung zeichnet sich dadurch aus, dass die Wickelelemente mit einer Antriebseinheit über ein zwischen der Antriebseinheit und den Wickelelementen wirkendes Verteilergetriebe drehbar antreibbar sind. Dabei ist insbesondere genau eine Antriebseinheit zum Drehantrieb beider Wickelelemente vorgesehen. Insbesondere ist ein Verteilergetriebe mit oder ohne Über- oder Untersetzung vorgesehen, das auf einer Zugangs-Seite mit einem Ausgangswellenabschnitt der Antriebseinheit verbunden ist und auf einer Abgangs-Seite zwei drehende Wellenabschnitte aufweist, die jeweils über beispielsweise eine Teleskopgelenkkupplung mit jeder der zwei Wickelelemente verbunden ist. Dabei ist die jeweilige Drehzahl der beiden abgangsseitigen drehenden Wellenabschnitte des Verteilergetriebes gleich, so dass auch beide Wickelelemente mit der gleichen Drehzahl drehen.

Alternativ kann das Verteilergetriebe auf der Zugangs-Seite mit einem Ende einer Teleskopgelenkkupplung verbunden sein, wobei das andere Ende der Teleskopgelenkkupplung mit dem Ausgangswellenabschnitt der Antriebseinheit verbunden ist. Auf der Abgangs-Seite des Verteilergetriebes sind die drehenden Wellenabschnitte jeweils mit einem dazugehörigen Wickelelement drehfest verbunden. Das Verteilergetriebe ist vorteilhaft fliegend gelagert.

Auch dies ermöglicht eine flexiblen Anpassung der Höhenposition der beiden Wickelelemente während eines Wickelvorgangs.

Eine weitere vorteilhafte Variante der Erfindung ist dadurch gekennzeichnet, dass eine Nachführeinheit vorgesehen ist, die abhängig vom Wickelfortschritt den oberen Rand der Abdeckelemente nachführt. Insbesondere ist eine Nachführeinheit vorgesehen, welche die oberen Ränder der beiden Abdeckelemente, welche auf der gleichen Höhe liegen, entsprechend nachführt. Werden zum Beispiel ausgehend von einer komplett abgedeckten Gebäudeöffnung die Abdeckelemente von unten her aufgewickelt, werden entsprechend dem Aufwickelfortschritt die oberen Ränder so abgesenkt, dass der Wickel mit dem einen Wickelement oder den beiden Wickelelementen sich nicht oder nur unwesentlich vertikal verändert. Damit wird eine von oben öffnende Wickelvorrichtung bereitgestellt, wobei die Gebäudeöffnung unten geschlossen bleibt. Beim Verdecken der Gebäudeöffnung durch Abwickeln der Abdeckelemente von unten her werden die oberen Ränder der Abdeckelemente entsprechend dem Abwickelvorgang nach oben bewegt mit der Nachführeinheit.

Grundsätzlich kann die Nachführeinheit auch andere Szenarien bereitstellen, zum Beispiel einen Vorgang, bei dem die abgedeckte Gebäudeöffnung von unten und gleichzeitig von oben geöffnet wird.

Auch Wickelvorrichtungen ohne Nachführeinheit sind denkbar.

Ebenfalls sind Wickelvorrichtungen möglich, welche von oben öffnen, während unten die Gebäudeöffnung abgedeckt bleibt. Dabei wird eine abgedeckte Gebäudeöffnung vom oberen Rand her durch das sich von oben aufwickelnde Abdeckelement nach unten geöffnet, wobei der untere Rand der Gebäudeöffnung geschlossen bleibt bzw. vom unteren Bereich des Abdeckelements abgedeckt bleibt.

Die Nachführeinheit umfasst vorteilhaft insbesondere mehrere wickelbare Zugelemente, welche mit einem Ende mit einem oberen Rand der beiden Abdeckelemente verbunden sind. Insbesondere sind zwei oder mehr Zugelemente zum Anheben der oberen Ränder der beiden Abdeckelemente vorgesehen, wobei die anderen Enden der Zugelemente mit wenigstens einem angetrieben drehbaren Wickelkörper auf- und abwickelbar sind. Damit werden die oberen Ränder der Abdeckelemente ohne dass diese selbst auf- oder abgewickelt werden vertikal bewegt bzw. abgesenkt oder angehoben.

Der wenigstens eine Wickelkörper kann vorteilhaft mit der gleichen Antriebseinheit, welche die zum Beispiel beide Wickelelemente drehbar antreibt, drehbar angetrieben werden.

Weiter ist es vorteilhaft, dass das Wickelelement mit einem oberen Teilbereich eines dazugehörigen Abdeckelements und einem unteren Teilbereich des dazugehörigen Abdeckelements verbunden ist, so dass beide Teilbereiche des Abdeckelements mit dem Wickelelement gemeinsam auf- und abwickelbar sind. Damit wird vorteilhafterweise ein schnelleres bzw. doppeltes Wickeln, bezogen auf eine Umdrehung eines Wickelelements, bereitgestellt, indem beide Teilbereiche gleichzeitig auf- bzw. abgewickelt werden. Dies betrifft z. B. eine sogenannte Mittenwickelung.

Insbesondere ist es vorteilhaft, wenn beide Abdeckelemente als Mittenwicklung realisiert sind.

Weiter ist es vorteilhaft, dass ein Abdeckelement zumindest über Teilflächen beheizbar ausgestaltet ist. Die Beheizung kann insbesondere elektrisch erfolgen und ist insbesondere im Hinblick auf eine Anordnung der Wickelvorrichtung in einer Umgebung vorteilhaft, in welcher Temperaturen unter dem Gefrierpunkt auftreten, wie zum Beispiel bei Außenanordnungen, die jahreszeitabhängig bzw. tageszeitabgängig tiefen Temperaturen ausgesetzt sind.

Das Abdeckelement weist insbesondere entsprechende Heizelemente am Abdeckelement selbst auf. Insbesondere wird bei den beiden Abdeckelementen zumindest das Abdeckelement beheizt, welches näher an der Gebäudeöffnung vorhanden ist. Insbesondere sind hierfür streifenförmige bzw. horizontal über eine Breite des Abdeckelements verlaufende Heizelemente vorteilhaft. Dazwischen können an den betreffenden Abdeckelementen freie Bereiche vorhanden sein, beispielsweise transparent oder reflektierend für Wärme- bzw. Lichteinstrahlung.

Außerdem ist es vorteilhaft, dass ein der Gebäudeöffnung näheres Abdeckelement reflektierend ausgestaltet ist, insbesondere um Wärmestrahlung zu reflektieren. Damit kann Sonnenstrahlung, die durch das vordere von der Gebäudeöffnung weiter entfernte Abdeckelement durchtritt, am hinteren zweiten Abdeckelement reflektiert und in den Innenbereich zwischen den beiden überlappenden Abdeckelementen zurückgeworfen werden, wodurch sich der Zwischenbereich bzw. der Luftspalt aufheizt. Ein Wärmeverlust von innen bzw. einem Bereich zwischen den überlappenden Abdeckelementen nach außen wird verringert. Damit wird ein Anfrieren der Abdeckelemente an Gegenabschnitten beispielsweise an feuchten Flächen verhindert bzw. es wird einer Eisschichtbildung auf den Abdeckelementen entgegengewirkt.

Schließlich ist es auch vorteilhaft, dass das Wickelelement beheizbar ist. Beispielsweise kann das Wickelelement als Heizrohr ausgebildet sein, beispielsweise mit einem warmen Wärmeträger durchströmt oder befüllt werden. Außerdem kann durch ein hohles Wickelelement ein Heizschlauch geführt werden, der von einer warmen Flüssigkeit durchströmt wird und damit den Luftspalt zwischen den überlappenden Abdeckelementen beheizt.

### Figurenbeschreibung:

Weitere Merkmale und Vorteile sind anhand verschiedener in den Figuren schematisch gezeigter erfindungsgemäßer Ausführungsbeispiele näher erläutert. Im Einzelnen zeigt:
- Figur 1: einen Teil einer ersten erfindungsgemäßen Wickelvorrichtung von der Seite an einer geschnitten dargestellten Gebäudewand,
- Figur 2:: einen Teil einer alternativen erfindungsgemäßen Wickelvorrichtung gemäß der Ansicht aus Figur 1,
- Figur 3:: eine weitere erfindungsgemäße Wickelvorrichtung in der Ansicht gemäß der Figuren 1 und 2,
- Figur 4:: eine vierte erfindungsgemäße Wickelvorrichtung gemäß der Ansicht aus den Figuren 1 bis 3,
- Figur 5:: eine Ansicht eines Teils der Wickelvorrichtung gemäß Figur 1 mit einer Antriebsanordnung an einer horizontal geschnittenen Gebäudewand,
- Figur 6:: die Anordnung gemäß Figur 5 in einer Frontansicht,
- Figur 7:: eine Ansicht gemäß Figur 5 mit einer alternativen Antriebsvorrichtung,
- Figur 8:: die Anordnung gemäß Figur 7 in einer Frontansicht,
- Figur 9:: stark schematisiert eine Frontansicht auf eine Wickelvorrichtung gemäß Figur 4 in einer modifizierten Form,
- Figur 10:: einen Ausschnitt des Abdeckelements gemäß Figur 9 von der Seite und
- Figur 11:: einen Ausschnitt von der Seite eines unteren Teils einer erfindungsgemäßen Wickelvorrichtung mit einem Wickelelement und den daran angreifenden nicht aufgewickelten Abdeckelementen.

In den Figuren sind für entsprechende Elemente von unterschiedlichen Ausführungsbeispielen der Erfindung teils die gleichen Bezugszeichen verwendet.

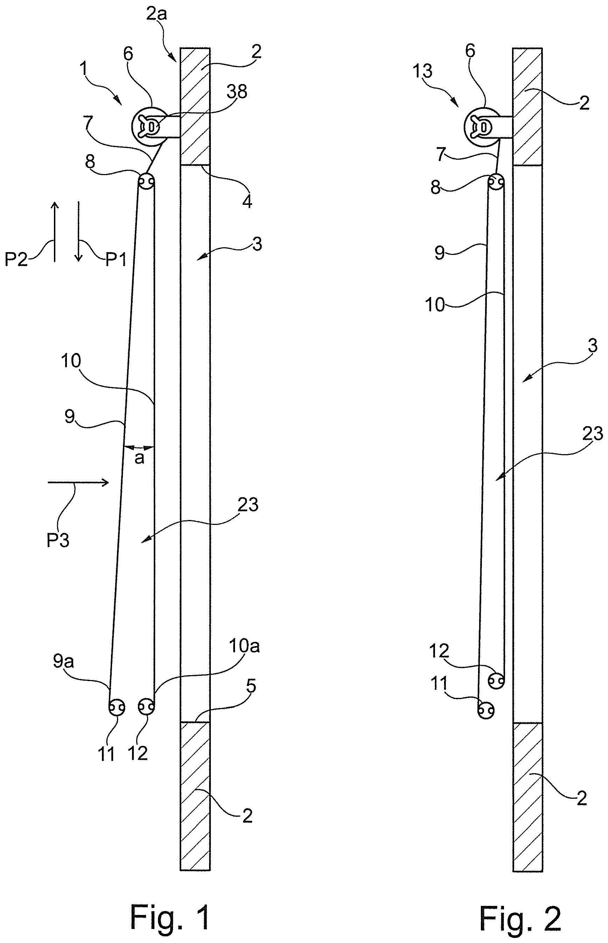

Figur 1 zeigt einen Teil einer als Wickeljalousie 1 ausgebildeten stark schematisiert dargestellten erfindungsgemäßen Wickelvorrichtung von der Seite im Vertikalschnitt zur Abdeckung einer Gebäudeöffnung 3 an einer vertikal ausgerichteten Gebäudewand 2. Die außen an der Gebäudewand 2 vorhandene Wickeljalousie 1 dient zur zumindest teilweisen außenseitigen Abdeckung bzw. Freigabe der Gebäudeöffnung 3, je nach Wickelzustand der Wickeljalousie 1. Die Gebäudewand 2 kann zum Beispiel eine Außenwand einer Stallung oder eines Gewächshauses sein, wobei über die Gebäudeöffnung 3 ein Licht- bzw. Wärmeeintrag in das Gebäudeinnere bzw. eine Temperaturanpassung im Gebäude und ein Luftaustausch mit der Außenumgebung möglich ist, abhängig von der Größe der mit der Wickeljalousie 1 abgedeckten Fläche der Gebäudeöffnung 3.

Die in der Grundform insbesondere rechteckige Gebäudeöffnung 2 weist zwei über die Öffnungsbreite beabstandete gegenüberliegende vertikal ausgerichtete Öffnungsränder auf und über die Höhe der Gebäudeöffnung 2 einen oberen Öffnungsrand 4 und einen unteren Öffnungsrand 5, welche parallel und horizontal verlaufen.

Die Wickeljalousie 1 weist an einer Außenseite 2a der Gebäudewand 2 oberhalb des oberen Öffnungsrandes 4 beispielsweise zwei oder mehr montierte Wickelkörper auf, die auf einer gemeinsamen horizontalen Höhe liegen und zum Beispiel gemeinsam auf einem horizontalen drehenden Rundprofil 38 aufgenommen sind. In den Figuren 1 bis 4 ist jeweils nur ein um die Horizontale drehbarer trommelartiger Wickelkörper 6 ersichtlich.

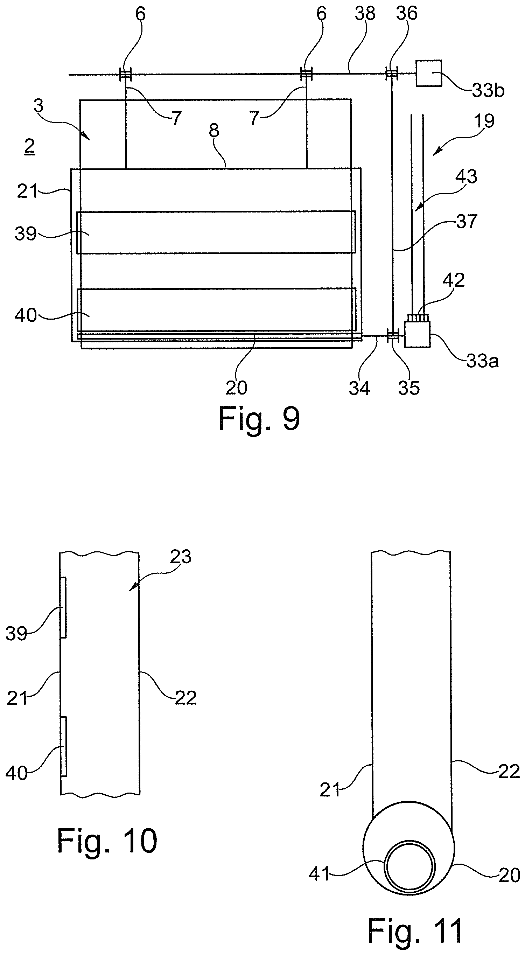

Auf dem Wickelkörper 6 ist ein Ende eines schnur- bzw. drahtseilartigen Zugelements 7 fixiert und durch eine angetriebene Drehung des Wickelkörpers 6 auf- und abwickelbar. Hierfür ist der Wickelkörper 6 mit dem Rundprofil 38 über einen Antrieb drehend antreibbar (s. Figur 9).

Ein weiteres Ende des Zugelements 7 ist oben an einem länglichen starren Tragrohr 8 befestigt. Mit dem horizontal ausgerichteten Tragrohr 8 sind außerdem die oberen Ränder von zwei Abdeckelementen verbunden, die als gleich große, flexible und flächige Folien 9 und 10 ausgebildet sind. Die vordere Folie 9 und die hintere Folie 10 sind in Figur 1 vollständig abgewickelt und weisen eine vertikale Höhe auf, welche in etwa der Höhe der Gebäudeöffnung 3 entspricht. Die Breite der Folien 9, 10 entspricht in etwa der Breite der Gebäudeöffnung 3.

Figur 1 zeigt die Wickeljalousie 1 im vollständig abgewickelten Zustand der Folien 9 und 10, die sich über die gesamte Fläche der Gebäudeöffnung 3 mit Abstand überlappen, so dass die Gebäudeöffnung 3 über die gesamte Fläche von den beiden in horizontaler Richtung P3 beabstandet angeordneten bzw. hintereinander liegenden Folien 9 und 10 abgedeckt ist. Ein in horizontaler Richtung P3 gemessener Abstand a auf mittlerer Höhe zwischen den beiden Folien 9 und 10 unterscheidet sich nur geringfügig von einem Abstand zwischen den Folien 9 und 10 im oberhalb und unterhalb der mittleren Höhe der beiden Folien 9, 10, wobei die Darstellung in Figur 1 nicht maßstabsgetreu ist und die beiden Folien 9, 10 in der Realität nahezu parallel zueinander ausgerichtet sind.

Ein unterer Rand 9a der Folie 9 ist über die gesamte Breite verbunden mit einem dazugehörigen Wickelelement, das als hohle Wickelwelle 11 ausgebildet. Unter dem Eigengeweicht der Wickelwelle 11 wird die Folie 9 flächig, faltenfrei aufgespannt gehalten.

Auf entsprechende Weise ist ein unterer Rand 10a der Folie 10 mit einem als Wickelwelle 12 ausgebildeten weiteren Wickelelement verbunden. Die Wickelwellen 11 und 12 befinden sich auf gleicher Höhe hintereinander und sind insbesondere gleichartig bzw. identisch ausgestaltet.

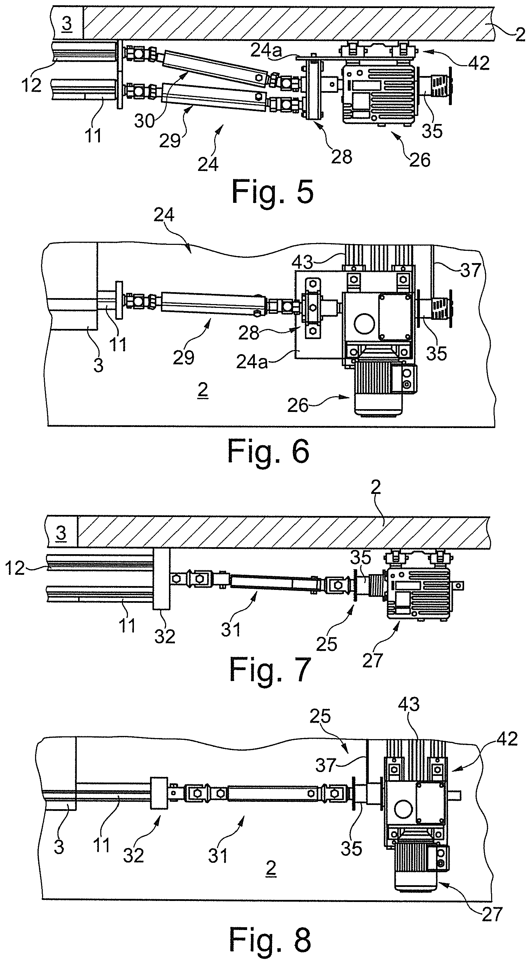

Ein Auf- und Abwickeln der beiden Folien 9, 10 erfolgt simultan und entsprechend, wobei die Wickelwellen 11, 12 gleichzeitig mit gleicher Drehzahl und Drehrichtung mit einer Antriebseinheit (s. Figuren 5-8) angetrieben um ihre jeweilige Längsachse rotieren. Ausgehend vom vollständig abgewickelten Zustand gemäß Figur 1 werden damit die beiden Folien 9 und 10 auf die wickelwellen 11 und 12 aufgewickelt. Damit bei diesem Öffnungsvorgang die Gebäudeöffnung 3 an ihrem unteren Öffnungsrand 5 abgedeckt bzw. geschlossen bleibt und sich allein vom oberen Öffnungsrand 5 her öffnet, wird der Wickelkörper 6 wie auch z. B. ein weiterer Wickelkörper mit einem Zugelement entsprechend gedreht, hier zum Beispiel im Uhrzeigersinn, so dass sich ein aufgewickelter Teil des Zugelements 7 von dem Wickelkörper 6 in dem Maß abwickelt, wie sich die Folien 9, 10 aufwickeln. Im Ergebnis verbleiben die Wickelwellen 11 und 12 zumindest im Wesentlichen auf der in Figur 1 dargestellten Höhenposition an dem unteren Öffnungsrand 5.

Da mit fortschreitendem Wickelvorgang der auf den Wickelwellen 11 bzw. 12 gebildete Wickel aus den aufgewickelten Abschnitten der Folien 9 und 10 im Außendurchmesser zunimmt und daher bei gleicher Drehzahl der Wickelwellen 11, 12 pro Zeiteinheit eine Aufwickelleistung der Wickelwellen erhöht, sind zum Beispiel Teleskopgelenkkupplungen zwischen dem Antriebsmotor und den Wickelwellen 11, 12 vorhanden. Alternativ können Vorkehrungen getroffen werden, dass das Zugelement 7 mit fortschreitendem Aufwickelvorgang der Folien 9, 10 im gleichen Maß schneller abgewickelt wird bzw. die abgewickelte Länge des Zugelements 7 pro Zeiteinheit wächst. Dann kann gegebenenfalls auf eine Teleskopgelenkkupplung verzichtet werden. Vorzugsweise kann dann zum Beispiel eine abgestimmte konische Außenform des Wickelkörpers 6 vorgesehen werden, auf dem das Zugelement 7 gemäß dem Zustand aus Figur 1 aufgewickelt ist bzw. entlang dem das Zugelement auf- und abwickelbar ist.

Durch entsprechendes Drehen des Wickelkörpers 6 senkt sich das Tragrohr 8 nach unten in Absenkrichtung P1, so dass die Gebäudeöffnung 3 vom oberen Öffnungsrand 4 her zunehmend von den Folien 9, 10 freigegeben wird. Am Ende des Öffnungsvorgangs sind die Folien 9, 10 vollständig auf den Wickelwellen 11, 12 aufgewickelt und das Zugelement 7 ist von dem Wickelkörper 6 abgewickelt, erstreckt sich also vertikal von oben über die Höhe der Gebäudeöffnung 3 bis nach unten. Dabei befindet sich das Tragrohr 8 benachbart oberhalb der beiden Wickel der Wickelwellen 11, 12. Das Tragrohr 8 und die beiden Wickel befinden sich im Bereich vor dem unteren Öffnungsrand 5.

Durch ein Anhalten der Drehung des Wickelkörpers 6 bzw. des dazugehörigen Rundprofils 38 und der Wickelwellen 11, 12 zu entsprechenden Zeitpunkten kann jede mögliche Öffnungsstellung der Wickeljalousie 1 vorgegeben werden, womit die Größe der von den Folien 9, 10 freigegebenen Gebäudeöffnung 3 wie gewünscht einstellbar ist.

Durch Umkehr der Drehrichtungen des Wickelkörpers 6 bzw. des Rundprofils 38 und der Wickelwellen 11, 12 gegenüber dem wie oben beschriebenen Öffnungsvorgang findet der entgegengesetzte Schließvorgang statt, bei dem sich das Tragrohr 8 in Öffnungsrichtung nach oben gemäß P2 bewegt, da das Zugelement 7 vom Wickelkörper 6 aufgewickelt wird, und die daran angreifenden Folien 9, 10 nach oben zieht, welche vom aufgewickelten Teil gemäß der beiden Wickel gleichzeitig jeweils von den Wickelwellen 11, 12 abgewickelt werden.

Das Tragrohr 8 dreht sich bei der Wickeljalousie 1 nicht, es findet demgemäß kein Auf- oder Abwickeln der oberen Ränder der Folien 9 und 10 statt, sondern allein eine translatorische vertikale Auf- und Abbewegung des Tragrohrs 8.

Figur 2 zeigt eine alternative erfindungsgemäße Wickeljalousie 13, welche sich von der Wickeljalousie 1 dadurch unterscheidet, dass im vollständig abgewickelten Zustand der Folien 9 und 10 die in Richtung P3 hintere Wickelwelle 12 etwas oberhalb der vorderen Wickelwelle 11 positioniert ist. Demgemäß ist eine Höhenabmessung der Folie 10 etwas geringer als die Höhe der Folie 9. Der horizontale Überlappungs-Abstand der beiden abgewickelten Folien 9 und 10 im unteren Bereich ist daher etwas geringer als der Abstand der beiden Folien 9 und 10 bei der Wickeljalousie 1.

Konstruktiv bedingt ist der horizontale Überlappungs-Abstand der beiden Folien 9, 10 auch bei teilweise aufgewickelten Abdeckelementen bzw. Folien 9, 10 zwischen den verbleibenden Abschnitten der nicht aufgewickelten Folien 9, 10 vorhanden bzw. ausgebildet. Dies trifft auch bei den weiteren nachfolgend beschriebenen Ausführungsbeispielen zu.

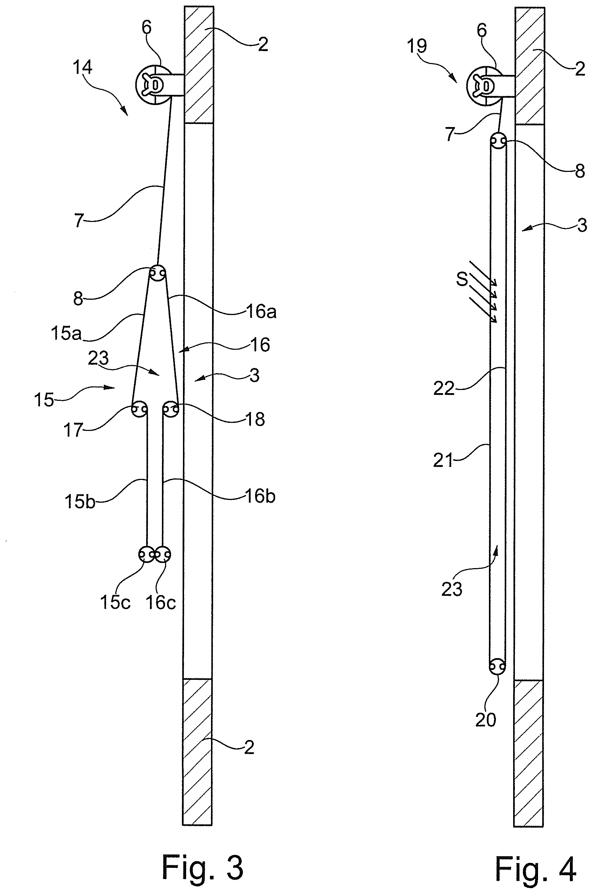

Eine weitere alternative Wickeljalousie 14 zeigt Figur 3 von der Seite an einer Gebäudewand 2. Dabei zeigt Figur 3 einen unten und oben offenen Bereich der Gebäudeöffnung 3. Die Wickeljalousie 14 ist hier als sogenannte Mittenwicklung ausgebildet, wonach eine mittig an einer vorderen Folie 15 angreifende Wickelwelle 17 und eine an einer hinteren Folie 16 angreifende Wickelwelle 18 vorgesehen ist. Die Folie 15 umfasst wischen dem Tragrohr 8 und der Wickelwelle 17 einen oberen Folienabschnitt 15a und einen unteren Folienabschnitt 15b zwischen der Wickelwelle 17 und einer unteren Randverstärkung 15c auf. Entsprechend weist die hintere Folie 16 einen oberen Folienabschnitt 16a und einen unteren Folienabschnitt 16b mit einer unteren Randverstärkung 16c auf. Durch Drehen der Wickelwelle 17 um ihre Längsachse wird demgemäß der obere Folienabschnitt 15a und der untere Folienabschnitt 15b gleichzeitig auf die Wickelwelle 17 aufgewickelt bzw. gleichzeitig von der Wickelwelle 17 abgewickelt. Entsprechend wird die Folie 16 mit ihren beiden Folienabschnitten 16a und 16b auf die Wickelwelle 18 gleichzeitig auf- bzw. von dieser abgewickelt. Das Tragrohr 8 an den oberen Enden der Folien 15, 16 wird entsprechend abgesenkt oder angehoben durch Abwickeln oder Aufwickeln des Zugelements 7 mit dem Wickelkörper 6.

Gegenüber einer Einfachwicklung wie z. B. die Figuren 1 und 2 zeigen, lassen sich mit der Wickeljalousie 14 Folien schneller auf- bzw. abwickeln, was bei größeren Höhen der Folien bzw. Gebäudeöffnungen vorteilhaft ist.

Figur 4 zeigt eine weitere alternative Wickeljalousie 19, die sich von der Wickeljalousie 1 gemäß Figur 1 dadurch unterscheidet, dass genau ein als angetrieben drehbare Wickelwelle 20 ausgebildetes Wickelelement vorgesehen ist. Demgemäß ist eine vordere Folie 21 und eine hintere Folie 22 jeweils mit ihrem unteren Rand an der gemeinsamen Wickelwelle 20 fixiert. Die Folien 21, 22 und werden durch Drehen der Wickelwelle 20 gemeinsam gleichzeitig auf die Wickelwelle 20 aufgewickelt bzw. von dieser abgewickelt. Das obere Tragrohr 8 mit den daran angreifenden oberen Rändern der Folien 21, 22 wird wie zur Wickeljalousie 1 beschrieben nachgeführt.

Zwischen den abgewickelten überlappenden Abschnitten der Folien 21, 22 gemäß Figur 4 ist ein materialfreier Bereich 23 vorhanden, welcher als Luftspalt ausgebildet ist. Auch die Wickeljalousien 1, 13 und 14 weisen entsprechende Bereiche 23 zwischen den abgewickelten überlappenden jeweiligen Folien 9, 10 bzw. 15, 16 auf. Der Zwischenbereich 23 kann sich durch einfallende Sonnenstrahlung S (in Figur 4 angedeutet), welche durch die vordere Folie 9 bzw. 15 bzw. 21 fällt, erwärmt werden. Die vorderen Folien 9, 15 und 21 sind daher insbesondere transparent bzw. lichtdurchlässig. Die hinteren Folien 10, 16 bzw. 22 sind vorteilhaft innenseitig zumindest teilweise reflektierend.

Die Figuren 5, 6 bzw. 7, 8 zeigen zwei unterschiedliche Antriebsanordnungen 24 bzw. 25, welche zum Drehantrieb der zwei Wickelwellen 11, 12 einsetzbar sind. Die Antriebsanordnungen 24 und 25 gemäß der Figuren 7 und 8 weisen jeweils einen elektrischen Antriebsmotor 26 bzw. 27 zur Drehmomentenübertragung auf die Wickelwellen 11 und 12 auf.

Bei der Antriebsanordnung 24 ist ein abtriebseitiger motorisch rotierender Wellenabschnitt des Antriebsmotors 26 mit einem drehbaren Anschlussstück eines Verteilergetriebes 28 verbunden. Das Verteilergetriebe 28 weist zwei abgehende identische drehende Wellenstummel auf, welche über jeweils eine anschließende Teleskopgelenkanordnung 29 und 30 die Wickelwellen 11 und 12 drehend antreibt, wenn der Antriebsmotor 26 eingeschaltet ist. Das Verteilergetriebe 28 ist an einer vertikal an der Gebäudewand 2 bewegbar geführten Aufnahmeplatte 24a fest aufgenommen, an der auch der Antriebsmotors 26 befestigt ist.

Alternativ zur Antriebsanordnung 24 ist bei der Antriebsanordnung 25 der Antriebsmotor 27 abtriebseitig mit einer Teleskopgelenkkupplung 31 verbunden, welche mit einem dem Antriebsmotor 27 abgewandten Ende an ein Verteilergetriebe 32 anschließt, dessen beide abgehenden drehenden Wellenstummel mit den beiden Wickelwellen 11 und 12 drehend verbunden sind. Das Verteilergetriebe 32 ist fliegend gelagert gemeinsam mit den beiden Wickelwellen 11, 12.

Figur 9 zeigt nicht maßstäblich und stark vereinfacht in Frontalansicht die Gebäudeöffnung 3 an der Gebäudewand 2, an der eine einfach wickelnde Wickelvorrichtung 19 gemäß Figur 4 mit den Folien 21, 22 und der Wickelwelle 20 in einer modifizierten Form vorhanden ist. Die Wickelwelle 20 wird mit einem Antriebsmotor 33a über eine Verbindungswelle 34 angetrieben. Auf der drehenden Verbindungswelle 34, in die zum Beispiel eine Teleskopgelenkkupplung (nicht dargestellt) integriert ist, ist ein unterer Wickelkörper 35 vorhanden, der mit einem oberen Wickelkörper 36 auf einem Rundprofil 38 über ein flexibles Zugelement 37 verbunden ist. Das um die Wickelkörper 35, 36 wickelbare Zugelement 37 wie beispielsweise ein Stahlseil wird beim Aufwickeln der Folien 21, 22 auf den Wickelkörper 36 aufgewickelt und vom Wickelkörper 35 abgewickelt, so dass die Wickelwelle 20 auf der gleichen horizontalen Höhe verbleibt. Das Rundprofil 38 oberhalb der Gebäudeöffnung 3 wird von einem oberen positionsfesten Antriebsmotor 33b in Drehung versetzt wird und dabei die Wickelkörper 6 gedreht, wobei die aufgewickelten Zugelemente 7 von den Wickelkörpern 7 abwickelbar sind und das Tragrohr 8 mit den oberen Rändern der Folien 21, 22 wie beschrieben abgesenkt wird. Dabei wird die abgedeckte Gebäudeöffnung 3 von oben geöffnet. Zum Schließen der Gebäudeöffnung 3 von unten wird die Drehrichtung der Antriebsmotoren 33a, 33b umgekehrt und die Vorgänge laufen umgekehrt ab.

In der vorderen Folie 21 sind über die gesamte Breite der Folie 21 verlaufende streifenförmige Heizelemente 39 und 40 eingearbeitet, welche beispielsweise elektrisch betrieben sind und zur Beheizung des Bereichs 23 bzw. des Luftspalts zwischen den Folien 21 und 21 dient (s. Figuren 9, 10).

Als alternative Möglichkeit zur Beheizung des Bereichs 23 ist gemäß Figur 11 in die als Rohr ausgebildete hohle zylindrische Wickelwelle 20 ein Heizschlauch 41 untergebracht. Der Heizschlauch 41 kann mit einem warmen bzw. heißen Wärmeträger durchströmt werden, so dass sich der Luftspalt-Bereich 23 erwärmt und die Folien 21, 22 gegen ein Vereisen und gegen ein Anfrieren an der Gebäudewand 2 geschützt sind.

Für eine Anordnung, welche die Gebäudeöffnung 3 von unten öffnet, ist der Antriebsmotor 33a gemäß Figur 9 bzw. sind die Antriebsmotoren 26 und 27 gemäß der Figuren 5 bis 8 mit einer Schlittenanordnung 42 verbunden, welche vertikal entlang einer an der Gebäudewand 2 fest angebrachten Schlittenführung 43 vertikal nach oben und wieder zurück nach unten verfahrbar. Hierfür kann über das Zugelement 37 zwischen den Wickelkörpern 35 und 36 der jeweilige Antriebsmotor nachgeführt werden.

### Bezugszeichenliste:

- 1: Wickeljalousie
- 2: Gebäudewand
- 2a: Außenseite
- 3: Gebäudeöffnung
- 4: Öffnungsrand
- 5: Öffnungsrand
- 6: Wickelkörper
- 7: Zugelemente
- 8: Tragrohr
- 9: Folie
- 9a: Rand
- 10: Folie
- 10a: Rand
- 11: Wickelwelle
- 12: Wickelwelle
- 13: Wickeljalousie
- 14: Wickeljalousie
- 15: Folie
- 15a: Folienabschnitt
- 15b: Folienabschnitt
- 15c: Randverstärkung
- 16: Folie
- 16a: Folienabschnitt
- 16b: Folienabschnitt
- 16c: Randverstärkung
- 17: Wickelwelle
- 18: Wickelwelle
- 19: Wickeljalousie
- 20: Wickelwelle
- 21: Folie
- 22: Folie
- 23: Bereich
- 24: Antriebsanordnung
- 24a: Aufnahmeplatte
- 25: Antriebsanordnung
- 26: Antriebsmotor
- 27: Antriebsmotor
- 28: Verteilergetriebe
- 29: Teleskopgelenkkupplung
- 30: Teleskopgelenkkupplung
- 31: Teleskopgelenkkupplung
- 32: Verteilergetriebe
- 33a: Antriebsmotor
- 33b: Antriebsmotor
- 34: Verbindungswelle
- 35: Wickelkörper
- 36: Wickelkörper
- 37: Zugelement
- 38: Rundprofil
- 39: Heizelement
- 40: Heizelement
- 41: Heizschlauch
- 42: Schlittenanordnung
- 43: Schlittenführung

## Patentansprüche

1. Wickelvorrichtung (1, 13, 14, 19) zur Abdeckung von Gebäudeöffnungen (3) oder zur Bereitstellung von flexiblen Wänden, insbesondere für eine im Wesentlichen vertikale Anwendung, umfassend ein flächiges, flexibles Abdeckelement zur zumindest teilweisen Abdeckung der wenigstens einen Gebäudeöffnung (3) und ein von einer Antriebseinheit (26, 27, 33a) angetriebenes Wickelelement zum Einstellen einer Abdeckfläche der Abdeckung, wobei das Abdeckelement mit dem Wickelelement aufwickelbar und abwickelbar ist, dass zusätzlich zu einem ersten Abdeckelement (9, 15, 21) ein zweites Abdeckelement (10, 16, 22) vorgesehen ist, das im Abdeckzustand überlappend zum ersten Abdeckelement (9, 15, 21) anordenbar ist, wobei die Abdeckelemente (9, 10; 15, 16; 21, 22) mit einem Wickelement (11, 12; 17, 18; 20) aufwickelbar und abwickelbar sind, **dadurch gekennzeichnet, dass** ein oberer Rand des ersten Abdeckelements (9; 15; 21) und ein oberer Rand des zweiten Abdeckelements (10; 16; 22) an einer gemeinsamen Aufnahme (8) fixiert sind, wobei die Aufnahme (8) als ein längliches Profil ausgebildet ist, wobei kein Auf- oder Abwickeln der oberen Ränder stattfindet.

2. Wickelvorrichtung nach Anspruch 1, **dadurch gekennzeichnet, dass** die zwei Abdeckelemente (9, 10; 15, 16; 21, 22) in einem abgewickelten Zustand hintereinander angeordnet sind, so dass die beiden Abdeckelemente (9, 10; 15, 16; 21, 22) mit Abstand überlappen.

3. Wickelvorrichtung nach Anspruch 1 oder Anspruch 2, **dadurch gekennzeichnet, dass** ein unterer Rand des ersten Abdeckelements (21) und ein unterer Rand des zweiten Abdeckelements (22) an einem gemeinsamen Wickelelement (20) angreifen.

4. Wickelvorrichtung nach Anspruch 1 oder Anspruch 2, **dadurch gekennzeichnet, dass** ein unterer Rand (9a) des ersten Abdeckelements (9) an einem ersten Wickelelement (11) angreift und ein unterer Rand (10a) des zweiten Abdeckelements (10) an einem zweiten Wickelelement (12) angreift.

5. Wickelvorrichtung nach einem der vorhergehenden Ansprüche, **dadurch gekennzeichnet, dass** beide Abdeckelemente (9, 10; 15, 16; 21, 22) im Wesentlichen die gleichen Abmaße aufweisen.

6. Wickelvorrichtung nach einem der vorhergehenden Ansprüche, **dadurch gekennzeichnet, dass** beide Abdeckelemente (9, 10; 15, 16; 21, 22) im Hinblick auf die Lichtdurchlässigkeit und/oder das Reflexionsverhalten derart aufeinander abgestimmt sind, dass sich die zwischen den beiden überlappenden Abdeckelementen (9, 10; 15, 16; 21, 22) vorhandene Luft erwärmt.

7. Wickelvorrichtung nach einem der vorhergehenden Ansprüche, **dadurch gekennzeichnet, dass** zwei Wickelelemente (11, 12; 17, 18) vorgesehen sind, welche bei vollständig abgewickelten Abdeckelementen (9, 10; 15, 16) zueinander in vertikaler und/oder in horizontaler Richtung versetzt sind.

8. Wickelvorrichtung nach einem der vorhergehenden Ansprüche, **dadurch gekennzeichnet, dass** die Verbindung von Antriebseinheit (26, 27, 33a) und Wickelelement (11, 12; 17, 18; 20) derart ausgelegt ist, dass eine Änderung der vertikalen Höhenposition des Wickelelements (11, 12; 17, 18; 20) beim Wickelvorgang ausgeglichen werden kann.

9. Wickelvorrichtung nach einem der vorhergehenden Ansprüche, **dadurch gekennzeichnet, dass** die Wickelelemente (11, 12) mit einer Antriebseinheit (26, 27) über ein zwischen der Antriebseinheit (26, 27) und den Wickelelementen (11, 12) wirkendes Verteilergetriebe (28, 32) drehbar antreibbar sind.

10. Wickelvorrichtung nach einem der vorhergehenden Ansprüche, **dadurch gekennzeichnet, dass** eine Nachführeinheit (6, 7, 33b, 38) vorgesehen ist, die abhängig vom Wickelfortschritt den oberen Rand der Abdeckelemente (9, 10; 15, 16; 21, 22) nachführt.

11. Wickelvorrichtung nach einem der vorhergehenden Ansprüche, **dadurch gekennzeichnet, dass** das Wickelement (17, 18) mit einem oberen Teilbereich (15a, 16a) eines dazugehörigen Abdeckelements (15, 16) und einem unteren Teilbereich (15b, 16b) des dazugehörigen Abdeckelements (15, 16) verbunden ist, so dass beide Teilbereiche (15a, 15b; 16a, 16b) des Abdeckelements (15, 16) mit dem Wickelement (17, 18) gemeinsam auf- und abwickelbar sind.

12. Wickelvorrichtung nach einem der vorhergehenden Ansprüche, **dadurch gekennzeichnet, dass** ein Abdeckelement (21) zumindest über Teilflächen beheizbar ausgestaltet ist.

13. Wickelvorrichtung nach einem der vorhergehenden Ansprüche, **dadurch gekennzeichnet, dass** ein der Gebäudeöffnung (3) näheres Abdeckelement (10, 16, 22) reflektierend ausgestaltet ist, insbesondere um Wärmestrahlung zu reflektieren.

14. Wickelvorrichtung nach einem der vorhergehenden Ansprüche, **dadurch gekennzeichnet, dass** das Wickelelement (20) beheizbar ist.

## Claims

1. Winding device (1, 13, 14, 19) for covering of building openings (3) or for providing flexible walls, in particular for an essentially vertical application, comprising a flat, flexible cover element for at least partially covering the at least one building opening (3) and a winding element driven by a drive unit (26, 27, 33a) for adjusting the area covered by the covering, wherein the cover element can be wound and unwound by the winding element, wherein in addition to a first cover element (9, 15, 21) there is a second cover element (10, 16, 22), which can be arranged to overlap the first cover element (9, 15, 21) in the covering state, wherein the cover elements (9, 10; 15, 16; 21, 22) can be wound and unwound by a winding element (11, 12; 17, 18; 20), **characterised in that** an upper edge of the first cover element (9; 15; 21) and an upper edge of the second cover element (10; 16; 22) are fixed onto a common mount (8), wherein the mount (8) is designed as an elongated profile, wherein there is no winding or unwinding of the upper edges.

2. Winding device according to claim 1, **characterised in that** the two cover elements (9, 10; 15, 16; 21, 22) are arranged one behind the other in an unwound state so that the two cover elements (9, 10; 15, 16; 21, 22) overlap with spacing.

3. Winding device according to claim 1 or claim 2, **characterised in that** a lower edge of the first cover element (21) and a lower edge of the second cover element (22) engage on a common winding element (20).

4. Winding device according to claim 1 or claim 2, **characterised in that** a lower edge (9a) of the first cover element (9) engages on a first winding element (11) and a lower edge (10a) of the second cover element (10) engages on a second winding element (12).

5. Winding device according to any of the preceding claims, **characterised in that** the two cover elements (9, 10; 15, 16; 21, 22) have essentially the same dimensions.

6. Winding device according to any of the preceding claims, **characterised in that** the two cover elements (9, 10; 15, 16; 21, 22) are coordinated with each other in terms of light transparency and/or reflectivity, **in that** the air between the two overlapping cover elements (9, 10; 15, 16; 21, 22) is heated.

7. Winding device according to any of the preceding claims, **characterised in that** two winding elements (11, 12; 17, 18) are provided, which are staggered relative to each other in vertical and/or in horizontal direction when the cover elements (9, 10; 15, 16) are fully unwound.

8. Winding device according to any of the preceding claims, **characterised in that** the connection between the drive unit (26, 27, 33a) and winding element (11, 12; 17, 18; 20) is designed such that a change in the vertical height position of the winding element (11, 12; 17, 18; 20) can be balanced out during the winding process.

9. Winding device according to any of the preceding claims, **characterised in that** the winding elements (11, 12) can be driven in rotation by a drive unit (26, 27) across a transfer case (28, 32) operating between the drive unit (26, 27) and the winding elements (11, 12).

10. Winding device according to any of the preceding claims, **characterised in that** a tracking unit (6, 7, 33b, 38) is provided, which tracks the upper edge of the cover elements (9, 10; 15, 16; 21, 22) according to the progress of the winding process.

11. Winding device according to any of the preceding claims, **characterised in that** the winding element (17, 18) is connected to an upper portion (15a, 16a) of a corresponding cover element (15, 16) and a lower portion (15b, 16b) of the corresponding cover element (15, 16) so that both portions (15a, 16a) of the cover element (15, 16) can be wound and unwound jointly by the winding element (17, 18).

12. Winding device according to any of the preceding claims, **characterised in that** a cover element (21) is designed to be heatable at least over partial areas.

13. Winding device according to any of the preceding claims, **characterised in that** a cover element (10, 16, 22) closer to the building opening (3) is designed to be reflective, especially to reflect thermal radiation.

14. Winding device according to any of the preceding claims, **characterised in that** the winding element (20) can be heated.

## Revendications

1. Dispositif d'enroulement (1, 13, 14, 19) pour recouvrir des ouvertures de bâtiment (3) ou pour réaliser des parois flexibles, en particulier pour une utilisation sensiblement verticale, comprenant un élément de couverture plat et flexible pour recouvrir au moins en partie l'au moins une ouverture de bâtiment (3), et un élément d'enroulement entraîné par une unité d'entraînement (26, 27, 33a) pour régler une surface de recouvrement de la couverture, l'élément de couverture pouvant être enroulé et déroulé avec l'élément d'enroulement, un deuxième élément de couverture (10, 16, 22) étant prévu en plus d'un premier élément de couverture (9, 15, 21) qui, à l'état de recouvrement, peut être disposé en chevauchant le premier élément de couverture (9, 15, 21), les éléments de couverture (9, 10 ; 15, 16 ; 21, 22) pouvant être enroulés et déroulés avec un élément d'enroulement (11, 12 ; 17, 18; 20), **caractérisé en ce qu'**un bord supérieur du premier élément de couverture (9; 15 ; 21) et un bord supérieur du deuxième élément de couverture (10 ; 16 ; 22) sont fixés à un récepteur commun (8), le récepteur (8) étant réalisé sous la forme d'un profilé allongé, aucun enroulement ou déroulement des bords supérieurs n'ayant lieu.

2. Dispositif d'enroulement selon la revendication 1, **caractérisé en ce que** les deux éléments de couverture (9, 10 ; 15, 16 ; 21, 22) sont disposés l'un derrière l'autre à l'état déroulé, de telle sorte que les deux éléments de couverture (9, 10 ; 15, 16 ; 21, 22) se chevauchent à distance.

3. Dispositif d'enroulement selon la revendication 1 ou la revendication 2, **caractérisé en ce qu'**un bord inférieur du premier élément de couverture (21) et un bord inférieur du deuxième élément de couverture (22) sont en prise avec un élément d'enroulement commun (20).

4. Dispositif d'enroulement selon la revendication 1 ou la revendication 2, **caractérisé en ce qu'**un bord inférieur (9a) du premier élément de couverture (9) est en prise avec un premier élément d'enroulement (11) et un bord inférieur (10a) du deuxième élément de couverture (10) est en prise avec un deuxième élément d'enroulement (12).

5. Dispositif d'enroulement selon l'une des revendications précédentes, **caractérisé en ce que** les deux éléments de couverture (9, 10 ; 15, 16 ; 21, 22) ont sensiblement les mêmes dimensions.

6. Dispositif d'enroulement selon l'une des revendications précédentes, **caractérisé en ce que** les deux éléments de couverture (9, 10 ; 15, 16 ; 21, 22) sont adaptés de telle sorte l'un à l'autre en ce qui concerne la transmission de la lumière et/ou le comportement de réflexion, que l'air présent entre les deux éléments de couverture (9, 10 ; 15, 16 ; 21, 22) se chevauchant se chauffe.

7. Dispositif d'enroulement selon l'une des revendications précédentes, **caractérisé en ce qu'**il est prévu deux éléments d'enroulement (11, 12 ; 17, 18) qui, lorsque les éléments de couverture (9, 10 ; 15, 16) sont complètement déroulés, sont décalés l'un par rapport à l'autre dans la direction verticale et/ou horizontale.

8. Dispositif d'enroulement selon l'une des revendications précédentes, **caractérisé en ce que** la liaison de l'unité d'entraînement (26, 27, 33a) et de l'élément d'enroulement (11, 12 ; 17, 18 ; 20) est conçue de telle sorte qu'une modification de la position verticale en hauteur de l'élément d'enroulement (11, 12 ; 17, 18 ; 20) peut être compensée pendant l'opération d'enroulement.

9. Dispositif d'enroulement selon l'une des revendications précédentes, **caractérisé en ce que** les éléments d'enroulement (11, 12) peuvent être entraînés en rotation par une unité d'entraînement (26, 27) par l'intermédiaire d'une boîte de transfert (28, 32) agissant entre l'unité d'entraînement (26, 27) et les éléments d'enroulement (11, 12).

10. Dispositif d'enroulement selon l'une des revendications précédentes, **caractérisé en ce qu'**il est prévu une unité d'asservissement (6, 7, 33b, 38) qui, en fonction de l'avancement de l'enroulement, asservit le bord supérieur des éléments de couverture (9, 10 ; 15, 16 ; 21, 22).

11. Dispositif d'enroulement selon l'une des revendications précédentes, **caractérisé en ce que** l'élément d'enroulement (17, 18) est relié à une section supérieure (15a, 16a) d'un élément de couverture associé (15, 16) et à une section inférieure (15b, 16b) de l'élément de couverture associé (15, 16), de sorte que les deux sections (15a, 15b ; 16a, 16b) de l'élément de couverture (15, 16) peuvent être enroulées et déroulées ensemble avec l'élément d'enroulement (17, 18).

12. Dispositif d'enroulement selon l'une des revendications précédentes, **caractérisé en ce qu'**un élément de couverture (21) est conçu pour pouvoir être chauffé au moins sur des surfaces partielles.

13. Dispositif d'enroulement selon l'une des revendications précédentes, **caractérisé en ce qu'**un élément de couverture (10, 16, 22) qui est plus proche de l'ouverture du bâtiment (3) est conçu réfléchissant, en particulier pour réfléchir le rayonnement thermique.

14. Dispositif d'enroulement selon l'une des revendications précédentes, **caractérisé en ce que** l'élément d'enroulement (20) peut être chauffé.
